# EUROPÄISCHE PATENTANMELDUNG

(11) **EP 4 039 619 A1**
(43) Veröffentlichungstag der Anmeldung: **10.08.2022**
(21) Anmeldenummer: 21155536.2
(22) Anmeldetag: 05.02.2021
(51) Int. Cl.: B65G 15/00, B65G 43/02, F16G 3/06, G01L 5/04

(54) **FÖRDERER MIT KLEMMVERBINDUNG UND VERFAHREN ZUM BETREIBEN EINES FÖRDERERS**

(71) Anmelder: Aumund Fördertechnik GmbH, 47495 Rheinberg (DE)
(72) Erfinder: Furthmann, Reiner, 47495 Rheinberg (DE); Kirschniok, Christian, 47445 Moers (DE)
(74) Vertreter: Feucker, Max Martin

(57) **Zusammenfassung**

Die vorliegende Erfindung betrifft Förderer, umfassend mindestens einen umlaufenden Förderstrang (7, 8), wobei der Förderstrang mindestens eine Klemmverbindung (1) aufweist, wobei in der Klemmverbindung (1) mindestens ein Sensor (2) angeordnet ist, an dem Förderstrang (7, 8) ein Sender (3) zum kabellosen Senden von Daten angeordnet ist, der Sensor (2) mit dem Sender (3) verbunden ist und ein Empfänger (4) zum Empfangen der von dem Sender (3) gesendeten Daten vorgesehen ist.

## Beschreibung

Die vorliegende Erfindung betrifft einen Förderer und insbesondere ein Gurtbecherwerk, wobei der Förderer mindestens einen umlaufenden Förderstrang umfasst und der Förderstrang mindestens eine Klemmverbindung aufweist. Die Erfindung betrifft auch ein Verfahren zum Betreiben eines Förderers.

Ein solcher Förderer kann als Gurtbecherwerk ausgebildet sein, bei dem der Förderstrang einen in sich geschlossenen, umlaufenden Gurt aufweist, an dem Becher als Fördermittel befestigt sind. Die Enden des Gurtes sind zur geschlossenen Ausbildung mittels einer Klemmverbindung miteinander verbunden. Ein solches Gurtbecherwerk ist beispielsweise aus EP 2 870 084 B1 bekannt.

Der Zustand des Gurtes und der Klemmverbindung wird in regelmäßigen Abständen durch geschultes Personal vor Ort inspiziert. Solche insbesondere nach der Inbetriebnahme in kurzen Intervallen vorzunehmenden Inspektionen sind mit einem hohen (Personal-)Aufwand verbunden.

Aufgabe der vorliegenden Erfindung ist es daher, die mit Bezug zum Stand der Technik geschilderten Nachteile zu beseitigen und insbesondere einen Förderer und ein Verfahren zum Betreiben eines solchen Förderers anzugeben, mit denen der Zustand des Förderstrangs mit geringerem Aufwand überwacht werden kann.

Gelöst wird die Aufgabe durch einen Förderer und ein Verfahren mit den Merkmalen des jeweiligen unabhängigen Anspruchs. Vorteilhafte Weiterbildungen des Förderers und des Verfahrens sind Gegenstand der abhängigen Ansprüche und der Beschreibung, wobei einzelne Merkmale der vorteilhaften Weiterbildungen in technisch sinnvoller Weise miteinander kombinierbar sind. Insbesondere sind die mit Bezug zu dem Förderer offenbarten Merkmale auf das Verfahren anwendbar und umgekehrt.

Gelöst wird die Aufgabe insbesondere durch einen Förderer mit mindestens einem umlaufenden Förderstrang, wobei der Förderstrang mindestens eine Klemmverbindung aufweist und wobei in der Klemmverbindung mindestens ein Sensor angeordnet ist. Es wird ferner vorgeschlagen, dass an dem Förderstrang ein Sender zum kabellosen Senden von Daten angeordnet ist, der mit dem Sensor verbunden ist, wobei zudem ein Empfänger zum Empfangen der von dem Sender gesendeten Daten vorgesehen ist und der Empfänger stationär zu dem umlaufenden Förderstrang angeordnet ist.

Die Aufgabe wird insbesondere auch gelöst durch ein Verfahren zum Betreiben eines Förderers, umfassend zumindest die folgenden Schritte:
- Fördern von Fördergütern mittels eines umlaufenden Förderstrangs,
- Messen eines Parameters einer Klemmverbindung des Förderstrangs,
- Kabelloses Senden des gemessenen Parameters mittels eines mit dem Förderstrang bewegten Senders und
- Empfangen der gesendeten Parameter mittels eines Empfängers.

Der Förderstrang umfasst insbesondere mindestens einen in sich geschlossenen, umlaufenden Gurt. In einer Ausführungsform kann dabei vorgesehen sein, dass der Gurt selbst als Fördermittel ausgebildet ist. In diesem Fall ist der Förderer eine Bandanlage. Es kann aber auch vorgesehen sein, dass an dem Gurt mindestens ein Fördermittel (wie beispielsweise Becher) angebracht ist. In diesem Fall ist der Förderer beispielsweise als Gurtbecherwerk ausgebildet.

Es kann aber auch vorgesehen sein, dass der Förderstrang als Zugmittel eine (Laschen-)Kette aufweist, an der Fördermittel angebracht sein können.

Demgemäß ist der Förderer also insbesondere ein Stetigförderer mit oder ohne Zugmittel.

Der Förderer ist insbesondere zum Fördern von Schüttgütern ausgebildet.

Zur Ausbildung eines in sich geschlossenen Gurtes können die beiden Enden genau eines Gurtes über eine Klemmverbindung miteinander verbunden sein. Es kann aber auch vorgesehen sein, dass die Enden mehrerer Gurte zur Ausbildung eines in sich geschlossenen Gurtes bzw. eines in sich geschlossenen Gutsystems über jeweils eine Klemmverbindung miteinander verbunden sind.

Prinzipiell könnte die Klemmverbindung aber auch andere Elemente des Förderstrangs miteinander verbinden.

Als Klemmverbindung wird insbesondere eine Verbindung verstanden, bei der das mindestens eine zu verbindende Element zwischen insbesondere zwei Klemmelementen (später auch als Klemmbacken bezeichnet) bevorzugt kraftschlüssig eingeklemmt wird. Bevorzugt werden zwei miteinander zu verbindende Elemente (beispielsweise die beiden Enden eines Gurtes) zwischen mindestens zwei Klemmelementen kraftschlüssig aneinander gepresst. Die Klemmelemente erzeugen hierzu eine Klemmkraft, die auf das mindestens eine zu verbindende Element wirkt. Hierzu kann insbesondere mindestens eine, bevorzugt mehrere Schraube(n) (oder Gewindestangen) vorgesehen sein, die die Klemmelemente mit einer Klemmkraft beaufschlagt.

Die Klemmverbindung zwischen den Enden eines Gurtes oder zwischen zwei Gurten weist insbesondere eine erste Klemmbacke und eine zweite Klemmbacke auf, zwischen denen zwei Enden angeordnet sind, wobei wenigstens ein Sensor zwischen einer Klemmbacke und dem Gurt angeordnet ist. Die Enden des Gurtes beziehungsweise der Gurte können dabei in etwa orthogonal zu der Umlaufrichtung des Gurtes abgewinkelt sein und werden durch die beiden Klemmbacken aufeinandergepresst. Es kann somit beispielsweise unmittelbar eine Messgröße wie Druck, Zug, Verformung zwischen der Klemmbacke und dem Gurt gemessen werden. Mit mehreren Sensoren innerhalb einer Klemmverbindung kann beispielsweise eine Messgröße an mehreren Stellen der Klemmverbindung gemessen werden, woraus beispielsweise eine Kraftverteilung abgeleitet werden kann.

Eine solche Klemmverbindung kann auch eine dritte Klemmbacke umfassen, die zwischen den Enden des Gurtes beziehungsweise der Gurte angeordnet ist, wobei wenigstens ein Sensor zwischen der dritten Klemmbacke und dem Gurt angeordnet ist. Die dritte Klemmbacke erstreckt sich insbesondere ausgehend von der Innenseite des umlaufenden Gurtes in die Klemmverbindung hinein und weist auf der Gurtinnenseite Abrundungen auf, die die Abwicklung der Enden des Gurtbandes zur Umlaufrichtung unterstützen. Eine solche dritte Klemmbacke wird auch als Herzstück bezeichnet.

In der Klemmverbindung kann insbesondere ein Drucksensor, ein Zugsensor, eine Verformungssensor und/oder ein Temperatursensor angeordnet sein.

Es ist nun insbesondere vorgesehen, dass mittels des mindestens einen mit dem Förderstrang umlaufenden Sensors Parameter (wie beispielsweise Druck und/oder Temperatur) der Klemmverbindung ermittelt werden und diese Parameter mittels des ebenfalls mit dem Förderstrang umlaufenden Senders kabellos/drahtlos an den zu dem umlaufenden Förderstrang stationären Empfänger gesendet werden. Es ist somit nicht mehr nötig, dass der Förderer für jede Inspektion angehalten werden muss.

Bevorzugt ist hierbei, dass der Empfänger unmittelbar benachbart (also innerhalb von wenigen Metern) zu dem umlaufenden Förderstrang angeordnet ist. Dies hat den Vorteil, dass der Sender nur eine vergleichsweise geringe Sendeleistung benötigt, um Daten an den Empfänger zu übermitteln. Somit kann der Sender mit einer vergleichsweisen kleinen und mit dem Förderstrang umlaufenden Energieversorgung (wie beispielsweise Batterie oder Akku) ausgestattet werden und gleichzeitig lange eine Stromversorgung sicherstellen. In diesem Fall kann beispielsweise die drahtlose Datenübertragung von dem Sender zu dem Empfänger mittels einer Kurzstreckenübertragungstechnik wie Infrarot, Bluetooth oder WLAN- erfolgen. Die Übertragung der Daten kann beispielsweise dann erfolgen, wenn der Sender an dem Empfänger vorbeiläuft.

Prinzipiell wäre es aber auch vorstellbar, dass die von dem Sensor ermittelten Daten mittels einer Langstreckenübertragungstechnik wie beispielsweise über Funk, das Mobilfunknetz oder Satelliten an einen weiter entfernt aufgestellten Empfänger übermittelt werden.

In einer bevorzugten Ausführungsform kann auch vorgesehen sein, dass an dem Förderstrang eine mit dem Förderstrang umlaufende (rechnergestützte) Datenverarbeitungseinheit angeordnet ist, die mit dem Sensor und dem Sender verbunden ist. In der ersten Datenverarbeitungseinheit kann beispielsweise der von dem Sensor ermittelte Parameter zwischengespeichert werden und im Betrieb diskontinuierlich mittels des Senders an den insbesondere stationär benachbart zu dem Förderstrang angeordneten Empfänger übertragen werden. Die erste Datenverarbeitungseinheit kann in einer Weiterbildung aber auch eine erste Auswertung der gemessenen Parameter vornehmen und bei Ermittlung eines kritischen Wertes ein (beispielsweise optisches oder akustisches) Signal veranlassen.

In einer weiteren Ausführungsform kann vorgesehen sein, dass der Förderer eine (zweite) Datenverarbeitungseinheit aufweist, die mit dem Empfänger verbunden ist und die stationär ebenfalls benachbart zu dem umlaufenden Förderstrang angeordnet ist. Diese (zweite) Datenverarbeitungseinheit kann einen Speicher zum Speichern der von dem Sensor ermittelten und mittels des Senders übermittelten Parameter aufweisen. Diese (zweite) Datenverarbeitungseinheit kann zusätzlich oder alternativ eine Auswerteeinheit aufweisen, mit der die von dem Sensor ermittelten Parameter ausgewertet werden. Es kann zusätzlich oder alternativ vorgesehen sein, dass die zweite Datenverarbeitungseinheit eine Schnittstelle zur Übertragung der empfangenen, ausgewerteten und/oder zwischengespeicherten Daten an eine externe Auswerteeinheit aufweist.

Diese Schnittstelle kann beispielsweise eine kabelgebundene Schnittstelle sein, so dass eine mit der Wartung betraute Person die über einen längeren Zeitraum ermittelten Daten im Betrieb des Förderers auslesen kann und vor Ort entscheiden kann, ob eine Wartung erforderlich ist. Es kann somit sichergestellt werden, dass die Daten nicht über das Internet zugänglich sind.

Alternativ kann die Schnittstelle zur kabellosen Übertragung eingerichtet sein. Von der zweiten Datenverarbeitungseinheit können dann beispielsweise regelmäßig, unregelmäßig oder auf Abruf die Daten an eine externe Auswerteeinheit übermittelt werden. Beispielsweise kann die (zweite) Datenverarbeitungseinheit Sender der Kurzstreckenübertragungstechnik oder einen Sender der Langstreckenübertragungstechnik aufweisen und die gespeicherten Daten an eine übergeordnete Auswerteeinheit übermitteln. Somit kann aus der Ferne eine Diagnose über den Zustand des Förderstrangs gestellt werden.

Bei der Auswertung der gemessenen Parameter wird insbesondere der gemessene Parameter mit einem vorgegebenen Extremwert verglichen, wobei bei einem festgestellten Über- oder Unterschreiten des Extremwerts ein Signal erzeugt wird. So kann insbesondere über den zeitlichen Verlauf des Drucks in der Klemmverbindung und insbesondere in Kombination mit dem zeitlichen Verlauf der Temperatur darauf geschlossen werden, in welchem Zustand sich die Klemmverbindung oder der Gurt befindet und ob eine Wartung erforderlich ist. Hierbei kann der zeitliche Verlauf der Parameter mit vorgegebenen Werten verglichen werden. Es wäre aber auch vorstellbar, eine künstliche Intelligenz anzulernen, die die Auswertung automatisiert durchführt. Der zeitliche Verlauf der Messwerte wird dabei insbesondere über mehrere Tage, Wochen und Monate ausgewertet. In diesem Fall kann auch ein zeitlich anormaler Verlauf des Parameters als kritischer Wert erkannt werden.

Die Erfindung sowie das technische Umfeld werden im Folgenden anhand der Figuren beispielhaft erläutert. Es zeigen schematisch
- Figur 1:: eine Aufsicht auf ein Gurtbecherwerk mit einem einen in sich geschlossenen umlaufenden Gurt, Becher und eine Klemmverbindung aufweisenden Förderstrang sowie mit einem Empfänger,
- Figur 2:: eine Darstellung der Klemmverbindung zwischen den Enden des Gurtes und
- Figur 3:: eine Seitenansicht des Förderstranges.

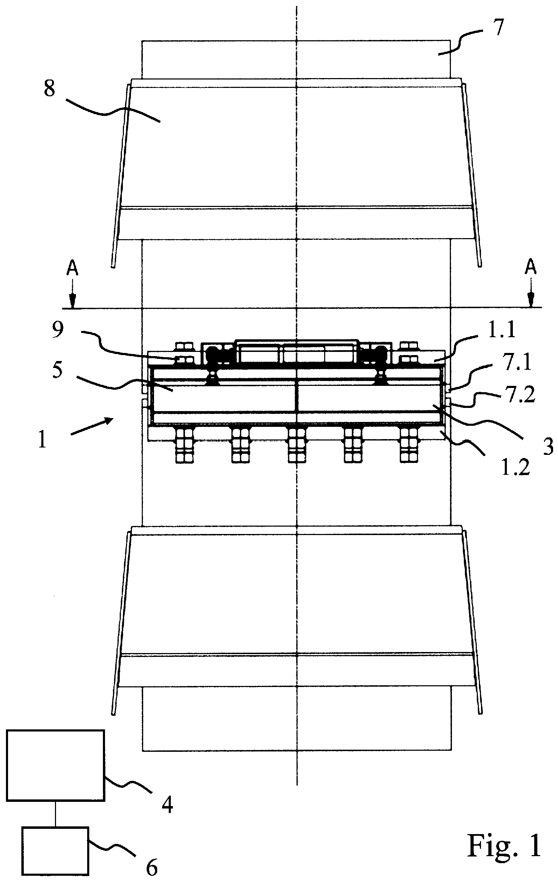

In Figur 1 ist ein Förderer dargestellt, der einen Förderstrang sowie einen mit einer zweiten Datenverarbeitungseinheit 6 verbundenen Empfänger 4 aufweist.

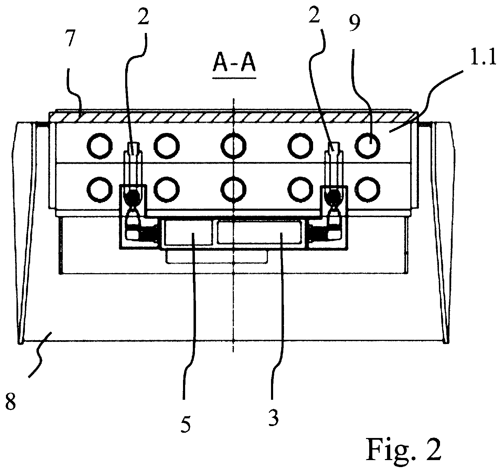

Der Förderstrang des Förderers umfasst einen Gurt 7, dessen erstes Ende 7.1 und zweites Ende 7.2 mittels einer Klemmverbindung 1 miteinander verbunden sind. Als weiterer Bestandteil des Förderstrangs sind Becher 8 an dem Gurt 7 befestigt (s. auch Fig. 2).

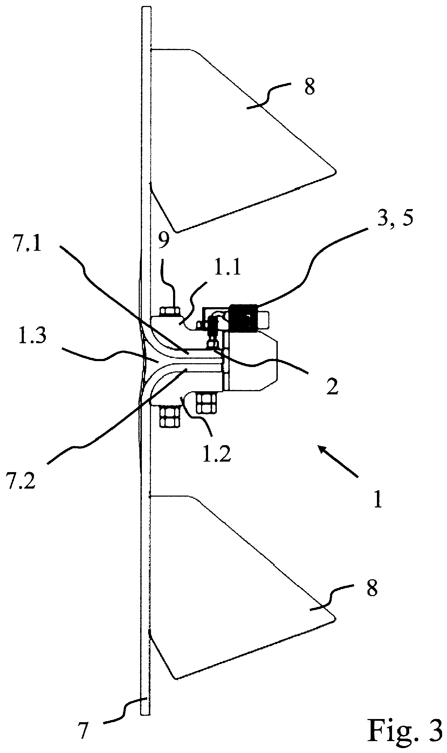

Wie insbesondere aus der Seitenansicht der Figur 3 hervorgeht, umfasst die Klemmverbindung 1 eine erste Klemmbacke 1.1, eine zweite Klemmbacke 1.2 und eine dritte Klemmbacke 1.3. Das erste Ende 7.1 des Gurtes 7 ist zwischen der ersten Klemmbacke 1.1 und der dritten Klemmbacke 1.3 angeordnet, während das zweite Ende 7.2 des Gurtes 7 zwischen der zweiten Klemmbacke 1.2 und der dritten Klemmbacke 1.3 angeordnet ist. Die Klemmbacken werden mittels mehrerer Schrauben 9 verspannt, wodurch eine Klemmkraft auf die Enden 7.1 und 7.2 des Gurtes 7 wirkt.

Es ist nun vorgesehen, dass zwei Sensoren 2 zwischen der ersten Klemmbacke 1.1 und dem ersten Ende 7.1 des Gurtes 7 angeordnet sind. Die Sensoren 2 sind mit einem Sender 3 und einer ersten Datenverarbeitungseinheit 5 verbunden. Der Sender 3 und die erste Datenverarbeitungseinheit 5 sind in einem Gehäuse integriert, das an der ersten Klemmbacke 7.1 befestigt ist.

Die Sensoren 2 können als Drucksensor, Zugsensor, Verformungssensor oder Temperatursensor ausgebildet sein. Während des Betriebs des Förderstranges können somit fortlaufend Parameter der Klemmverbindung 1 ermittelt werden, die auf der ersten Datenverarbeitungseinheit 5 gespeichert werden können. Wenn die umlaufende Klemmverbindung 1 während des Betriebs an dem stationären Empfänger 4 entlang läuft, können die auf der ersten Datenverarbeitungseinheit 5 gespeicherten Daten mittels des Senders 3 an den Empfänger 4 kabellos übermittelt werden. Die von dem Empfänger 4 empfangenen Daten können auf der zweiten Datenverarbeitungseinheit 6 gespeichert werden. Die auf der zweiten Datenverarbeitungseinheit 6 gespeicherten Daten können entweder lokal von einem Servicemitarbeiter ausgelesen werden oder mittels einer nicht dargestellten Sendeeinheit an eine übergeordnete Kontrolleinheit gesendet werden. Die gemessenen Parameter können so mit vorgegebenen Extremwerten verglichen werden, wodurch auf den Zustand der Klemmverbindung 1 geschlossen werden kann. Auf diese Weise ist es nicht länger nötig, dass die Klemmverbindung 1 von einem Servicemitarbeiter manuell überprüft wird. Vielmehr kann eine Ferndiagnose gestellt werden und bei Bedarf die Klemmverbindung 1 gewartet werden.

### Bezugszeichenliste

- 1: Klemmverbindung
- 1.1: erste Klemmbacke
- 1.2: zweite Klemmbacke
- 1.3: dritte Klemmbacke
- 2: Sensor
- 3: Sender
- 4: Empfänger
- 5: erste Datenverarbeitungseinheit
- 6: zweite Datenverarbeitungseinheit
- 7: Gurt
- 7.1: erstes Ende
- 7.2: zweites Ende
- 8: Becher
- 9: Schraube

## Patentansprüche

1. Förderer, umfassend mindestens einen umlaufenden Förderstrang (7, 8), wobei der Förderstrang mindestens eine Klemmverbindung (1) aufweist,
**dadurch gekennzeichnet, dass**
- in der Klemmverbindung (1) mindestens ein Sensor (2) angeordnet ist,
- an dem Förderstrang (7, 8) ein Sender (3) zum kabellosen Senden von Daten angeordnet ist,
- der Sensor (2) mit dem Sender (3) verbunden ist und
- ein Empfänger (4) zum Empfangen der von dem Sender (3) gesendeten Daten vorgesehen ist.

2. Förderer nach Anspruch 1, wobei an dem Förderstrang (7, 8) eine erste Datenverarbeitungseinheit (5) angeordnet ist, die mit dem Sensor (2) und dem Sender (3) verbunden ist.

3. Förderer nach Anspruch 1 oder 2, wobei der Empfänger (4) als Bestandteil des Förderers stationär zu dem umlaufenden Förderstrang (7, 8) angeordnet ist.

4. Förderer nach einem der vorhergehenden Ansprüche, wobei der Förderer eine zweite Datenverarbeitungseinrichtung (6) aufweist, die mit dem Empfänger (4) verbunden ist und die stationär zu dem umlaufenden Förderstrang (7, 8) angeordnet ist.

5. Förderer nach einem der vorhergehenden Ansprüche, wobei der mindestens eine Sensor (2) einen Sensor der folgenden Gruppe umfasst:
- Drucksensor,
- Zugsensor,
- Verformungssensor,
- Temperatursensor.

6. Förderer nach einem der vorhergehenden Ansprüche, wobei der Förderstrang mindestens einen Gurt (7) aufweist.

7. Förderer nach Anspruch 6, wobei die Klemmverbindung (1) zwischen den Enden (7.1, 7.2) eines in sich geschlossenen Gurtes (7) ausgebildet ist.

8. Förderer nach Anspruch 7, wobei die Klemmverbindung (1) eine erste Klemmbacke (1.1) und eine zweite Klemmbacke (1.2) umfasst, zwischen denen die beiden Enden (7.1, 7.2) des Gurtes (7) angeordnet sind, wobei wenigstens ein Sensor (2) zwischen einer Klemmbacke (1.1, 1.2) und dem Gurt (7) angeordnet ist.

9. Förderer nach Anspruch 8, wobei die Klemmverbindung (1) eine dritte Klemmbacke (1.3) umfasst, die zwischen den Enden (7.1, 7.2) des Gurtes (7) angeordnet ist, wobei wenigstens ein Sensor (2) zwischen der dritten Klemmbacke (1.3) und dem Gurt (7) angeordnet ist.

10. Förderer nach einem der vorhergehenden Ansprüche wobei der Förderstrang mindestens ein Fördermittel, wie Becher (8), umfasst.

11. Verfahren zum Betreiben eines Förderers, insbesondere eines Förderers nach einem der vorhergehenden Ansprüche, umfassend zumindest die folgenden Schritte:
- Fördern von Fördergütern mittels eines umlaufenden Förderstrangs,
- Messen eines Parameters einer Klemmverbindung des Förderstrangs,
- Kabelloses Senden des gemessenen Parameters mittels eines mit dem Förderstrang bewegten Senders,
- Empfangen der gesendeten Parameter mittels eines Empfängers.

12. Verfahren nach Anspruch 11, wobei die gemessenen Parameter in einer ersten Datenverarbeitungseinheit zwischengespeichert werden und im Betrieb diskontinuierlich mittels des Senders an den Empfänger übertragen werden.

13. Verfahren nach Anspruch 11 oder 12, wobei die vom Empfänger empfangenen Daten in einer zweiten Datenverarbeitungseinheit gespeichert werden und nur bei Bedarf an eine Auswerteeinheit übermittelt werden.

14. Verfahren nach einem der vorhergehenden Ansprüche 11 bis 13, wobei die gemessenen Parameter mit vorgegebenen Extremwerten verglichen werden und beim Über- oder Unterschreiten der Extremwerte ein Signal erzeugt wird und/oder wobei die gemessenen Parameter analysiert und bei Erkennung einer Anomalie eine Signal erzeugt wird.

15. Verfahren nach einem der vorhergehenden Ansprüche 11 bis 14, wobei insbesondere ein Druck als gemessener Parameter innerhalb einer Klemmverbindung gemessen wird und der zeitliche Verlauf des Parameters über mehrere Tage, Wochen und Monate mit jeweiligen kritischen Extremwerten verglichen wird, wobei insbesondere auch ein zeitlich anormaler Verlauf des Parameters als kritischer Wert erkannt werden kann.
